# FASCICULE DE BREVET EUROPEEN

(11) **EP 4 444 582 B1**
(45) Date de publication et mention de la délivrance du brevet: **28.01.2026**
(21) Numéro de dépôt: 22817698.8
(22) Date de dépôt: 14.11.2022
(51) Int. Cl.: B60R 13/08

(54) **ELÉMENT DE FILTRATION ACOUSTIQUE**
SCHALLFILTERELEMENT
SOUND FILTERING ELEMENT

(30) Priorité: 08.12.2021 FR 2113168
(43) Date de publication de la demande: 16.10.2024
(73) Titulaire: Renault s.a.s, 92100 Boulogne Billancourt (FR)
(72) Inventeur: GUILLEBON, Alain, 78280 GUYANCOURT (FR); PHILIPPE, Lucy, 78280 GUYANCOURT (FR)
(86) Numéro de dépôt international: PCT/EP2022/081843
(87) Numéro de publication internationale: WO 2023/104441

(56) Documents cités:
- WO-A1-2014/167210
- FR-A1- 2 799 718
- FR-A1- 2 928 607
- FR-A1- 2 963 920
- FR-A1- 2 965 240
- FR-A1- 3 052 122

## Description

### Domaine Technique de l'invention

L'invention concerne un dispositif de stockage de liquide lave-glace comprenant un élément de filtration acoustique pour un véhicule automobile comprenant un corps en mousse.

### Etat de la technique antérieure

Les véhicules automobiles doivent atteindre des niveaux de performance acoustique toujours plus élevés. Notamment, l'entrée en vigueur de la norme Euro7 impose d'atteindre un niveau de bruit dans l'habitacle inférieur à 68dB. Afin d'atteindre ces objectifs, il est connu d'isoler acoustiquement le compartiment moteur de l'habitacle avec des éléments en mousse formant des barrières acoustiques. Les éléments en mousse sont néanmoins encombrants et gênent l'intégration des autres composants au sein du compartiment moteur.

Parmi les autres composants présents dans le compartiment moteur figurent notamment différents réservoirs, comme par exemple le réservoir de liquide lave-glace. Ces réservoirs sont volumineux et doivent en outre disposer d'un accès pratique à utiliser permettant de les remplir pour le bon entretien du véhicule. Pour le remplissage de ces réservoirs, il est connu de prévoir une goulotte de remplissage dont l'ouverture est facilement accessible au sein du compartiment moteur. Cette goulotte de remplissage occupe également un volume important au sein du compartiment moteur.

FR 3 052 122 A1 divulgue un dispositif de stockage lave-glace avec un conduit. Un réservoir d'eau de nettoyage est relié par ce conduit à un ensemble collecteur d'auvent pour son raccordement à des buses. L'ensemble d'auvent est muni d'un élément acoustique globalement plan, tel qu'un bloc en mousse plus ou moins dense.

### Présentation de l'invention

Le but de l'invention est de fournir un dispositif de stockage de liquide lave-glace remédiant aux inconvénients ci-dessus et améliorant les éléments de filtration acoustique et dispositifs de stockage de liquide connus de l'art antérieur.

Plus précisément, un premier objet de l'invention est une solution permettant d'optimiser le volume disponible au sein du compartiment moteur.

### Résumé de l'invention

L'invention se rapporte un dispositif de stockage selon la revendication 1 comprenant un élément de filtration acoustique pour un véhicule automobile, l'élément de filtration comprenant un corps en mousse dans lequel est formé un canal de circulation pour un liquide.

Ladite mousse peut être une mousse à cellules fermées.

Le canal peut comprendre au moins un coude. Le canal peut être agencé de manière à permettre un écoulement d'un liquide par gravité. Le canal peut ne comprendre aucune zone de rétention de liquide.

L'élément de filtration acoustique peut comprendre un insert d'entrée débouchant dans ledit canal, l'insert d'entrée étant ancré dans le corps en mousse, et/ou il peut comprendre un insert de sortie débouchant dudit canal, l'insert de sortie étant ancré dans le corps en mousse.

L'insert d'entrée et/ou l'insert de sortie peut comprendre une portion tubulaire débouchant dans ledit canal et un moyen d'ancrage dans le corps en mousse, le moyen d'ancrage comprenant au moins un disque s'étendant à la périphérie de la portion tubulaire.

L'élément de filtration acoustique peut comprendre un insert d'entrée et un entonnoir coulissant entre une position rétractée à l'intérieur de l'insert d'entrée et une position déployée au moins partiellement à l'extérieur de l'insert d'entrée.

L'élément de filtration acoustique peut comprendre un insert de sortie, l'insert de sortie comprenant une portion tubulaire destinée à déboucher dans un réservoir, la portion tubulaire comprenant un trou d'évacuation d'air.

Le corps en mousse peut comprendre un orifice d'entrée et un orifice de sortie, l'orifice d'entrée et l'orifice de sortie étant agencés à deux extrémités opposées dudit canal, le corps en mousse comprenant une collerette s'étendant autour de l'orifice d'entrée et/ou une collerette s'étendant autour de l'orifice de sortie.

L'invention se rapporte à un dispositif de stockage de liquide lave-glace comprenant un élément de filtration acoustique tel que défini précédemment et un réservoir pour stocker du liquide lave-glace, le réservoir étant relié en aval dudit canal.

L'invention se rapporte également à un véhicule automobile selon la revendication 9.

L'élément de filtration acoustique et le réservoir peuvent être positionnés dans une aile avant du véhicule.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue en perspective d'une partie d'un véhicule automobile selon un mode de réalisation de l'invention.
La figure 2 est une vue partielle du véhicule selon une coupe transversale.
La figure 3 est une vue en perspective d'un élément de filtration acoustique selon un mode de réalisation de l'invention et d'un élément de caisse du véhicule.
La figure 4 est une vue en perspective d'un corps en mousse de l'élément de filtration acoustique.
La figure 5 est une vue en perspective d'un insert d'entrée de l'élément de filtration acoustique.
La figure 6 est une vue en perspective d'un insert de sortie de l'élément de filtration acoustique.
La figure 7 est une vue en perspective d'un entonnoir coulissant de l'élément de filtration acoustique.
La figure 8 est une vue en coupe illustrant la position rétractée et la position déployée de l'entonnoir coulissant.
La figure 9 est une vue en perspective d'un élément de filtration acoustique selon un perfectionnement de l'invention.
La figure 10 est une vue en coupe de l'élément de filtration acoustique de la figure 9.
La figure 11 est une vue en perspective de l'insert de sortie de l'élément de filtration acoustique de la figure 9.

### Description détaillée

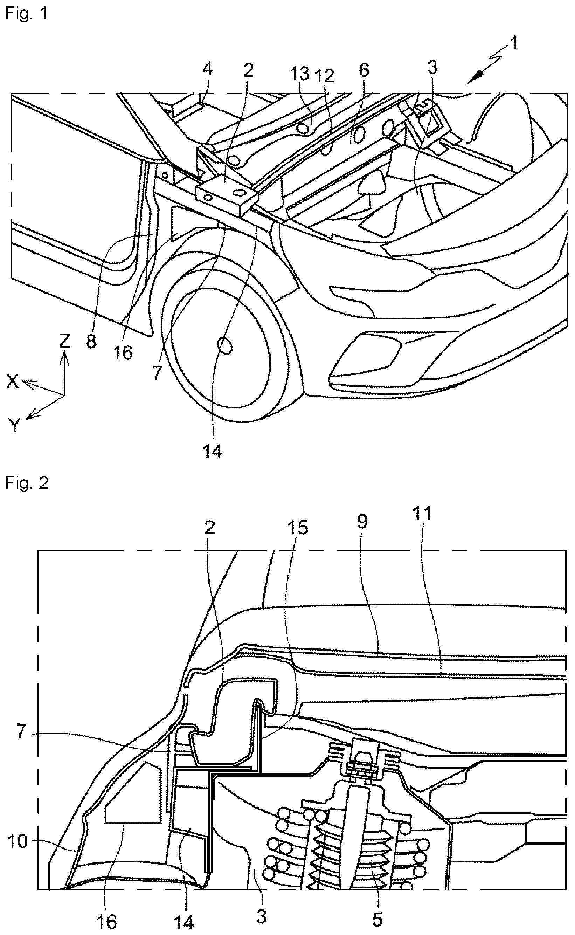

Les figures 1 et 2 illustrent un véhicule 1 automobile équipé d'un élément de filtration acoustique 2 selon un mode de réalisation de l'invention. Le véhicule 1 peut être de toute nature. Notamment, il peut être un véhicule particulier, un véhicule utilitaire, un camion ou un bus.

Dans ce document, l'axe X désigne l'axe longitudinal du véhicule 1. En marche avant et en ligne droite, le véhicule progresse de l'arrière vers l'avant selon une direction parallèle à son axe longitudinal. L'axe X est orienté de l'avant vers l'arrière du véhicule, c'est-à-dire dans le sens de la marche arrière. L'axe Y désigne l'axe transversal du véhicule. L'axe Y est orienté de la gauche vers la droite, la gauche et la droite étant définies selon le point de vue d'un conducteur du véhicule. L'axe Z désigne l'axe perpendiculaire à l'axe X et à l'axe Y. On considère que le véhicule repose sur un sol horizontal et que l'axe Z est un axe vertical, orienté de bas en haut. Les axes X, Y et Z forment un repère orthogonal. Ce même repère, défini par référence à un véhicule, sera aussi utilisé pour décrire l'élément de filtration acoustique 2, même considéré hors d'un véhicule, puisqu'il est destiné à un montage selon une orientation spécifique dans un véhicule.

Le véhicule 1 comprend d'une part un compartiment moteur 3, à l'avant du véhicule, et un habitacle 4. Le compartiment moteur est un espace dans lequel se trouve différents organes fonctionnels 5 du véhicule, notamment un moteur de traction et/ou de propulsion du véhicule. L'habitacle 4 est un espace destiné à être occupé par le conducteur et/ou le ou les passagers du véhicule. L'habitacle 4 est séparé du compartiment moteur 3 notamment par un tablier 6, lequel forme une paroi s'étendant sensiblement parallèlement aux axes Y et Z.

Le véhicule 1 comprend également deux ailes 7 s'étendant latéralement de part et d'autre du compartiment moteur 3. Les ailes 7 s'étendent longitudinalement depuis un parechoc avant jusqu'aux portières latérales avant du véhicule. En particulier, chaque aile 7 est séparée d'une portière latérale avant par une cloison 8, sensiblement coplanaire avec le tablier 6 ou formant une partie du tablier 6. Latéralement, l'aile 7 s'étend entre un élément d'habillage 10 de l'aile 7 et le compartiment moteur 3. En outre, chaque aile 7 s'étend verticalement au-dessus des roues avant gauche et droite du véhicule, et jusqu'à la hauteur d'un capot 9 du véhicule.

Le capot 9 est un moyen de couverture du compartiment moteur 3 et des ailes 7. Le capot 9 est articulé entre une position ouverte et une position fermée. Le volume de chaque aile 7 est donc accessible lorsqu'on ouvre le capot 9. Le capot 9 comprend une doublure 11 formant une face inférieure du capot. Le véhicule 1 comprend aussi un joint d'étanchéité 12 s'étendant transversalement à l'arrière du capot 9 et un bac d'évacuation d'eau 13 en contrebas d'un parebrise du véhicule, derrière le joint d'étanchéité 12.

Le véhicule 1 comprend aussi un élément de caisse 14 s'étendant sensiblement parallèlement à l'axe X à l'interface entre l'aile 7 et le compartiment moteur 3. Cet élément de caisse 14, qui peut être un renfort côté d'auvent ou un longeron, est un élément structurel métallique du véhicule. Il s'étend longitudinalement vers l'avant depuis la cloison 8 à laquelle il est fixé. Il peut également être fixé à d'autres parties de la caisse du véhicule. En particulier, les éléments de caisse 14 des ailes gauches et droites peuvent être reliés à une même traverse s'étendant sensiblement parallèlement à l'axe Y. Enfin, l'élément de caisse 14 peut comprendre une section sensiblement constante selon l'axe X, notamment une section rectangulaire. Il peut être surmonté d'un rebord vertical 15. L'élément de caisse 14 s'étend sous le capot 9 à une distance non nulle de celui-ci. Il existe donc un espace entre le rebord vertical 15 et la doublure 11 du capot. L'élément de caisse 14 peut supporter une articulation du capot 9 et/ou une butée du capot 9.

Selon le mode de réalisation présenté, l'élément de filtration acoustique 2 est intégré dans l'aile gauche du véhicule. En variante, il pourrait aussi être intégré dans l'aile droite du véhicule, et même dans tout autre volume du véhicule. L'élément de filtration acoustique 2 est positionné verticalement au-dessus de l'élément de caisse 14. Il est agencé de sorte à combler l'espace séparant l'élément de caisse 14 du capot 9 dans au moins un plan vertical et transversal, notamment entre le rebord vertical 15 et la doublure 11 du capot. En remarque, sur la figure 2, on constate que l'élément de filtration acoustique n'est pas en contact avec le capot 9. Ceci s'explique par le fait que la coupe de la figure 2 n'est pas réalisée dans un plan où l'élément de filtration acoustique est en contact avec le capot 9.

De plus, l'élément de filtration acoustique 2 peut s'étendre jusqu'à une extrémité latérale du joint d'étanchéité 12 et/ou jusqu'à une extrémité latérale du bac d'évacuation d'eau 13. L'élément de filtration acoustique 2 forme une barrière acoustique entre le compartiment moteur 3 et l'habitacle 4 du véhicule. En particulier, l'élément de filtration acoustique 2 est agencé de sorte à empêcher les ondes sonores émises au sein du compartiment moteur 3 de passer dans l'aile 7 puis dans l'habitacle 4.

L'élément de filtration acoustique 2 comprend préférentiellement une portion d'interfaçage 40 avec le joint d'étanchéité 12. Cette portion d'interfaçage 40 est d'orientation sensiblement identique à celle de l'extrémité du joint d'étanchéité 12 quelle supporte. Cette portion d'interfaçage 40 peut être disposée en saillie latérale d'axe Y depuis le bord intérieur de l'élément de filtration acoustique 2. Cette portion d'interfaçage 40 peut être disposée au niveau de l'extrémité avant de l'élément de filtration acoustique 2. Cette portion d'interfaçage 40 peut être de type d'une excroissance formant une nervure contre laquelle le joint d'étanchéité 12 est disposé en appui pour former une continuité de ligne d'étanchéité. Selon une variante de réalisation, la portion d'interfaçage 40 peut être de profil creux de sorte à former une rainure destinée à l'assemblage du joint d'étanchéité 12, formant par la même une continuité de ligne d'étanchéité.

Enfin, le véhicule 1 comprend également un réservoir 16 pour un liquide, notamment un réservoir de liquide lave-glace. Ce réservoir contient donc une réserve de liquide lave-glace qui peut être injecté sur le parebrise ou sur tout autre équipement du véhicule nécessitant un nettoyage régulier. Ce réservoir 16 est positionné dans l'aile 7. Le réservoir 16 peut être réalisé en matière plastique. Il peut notamment comprendre toute forme géométrique ce qui permet de le positionner dans des zones difficiles à exploiter car présentant des formes inadaptées à la plupart des organes du véhicule. En variante, le réservoir 16 pourrait être destiné à stocker tout autre liquide du véhicule, par exemple un liquide de refroidissement ou un liquide de freinage.

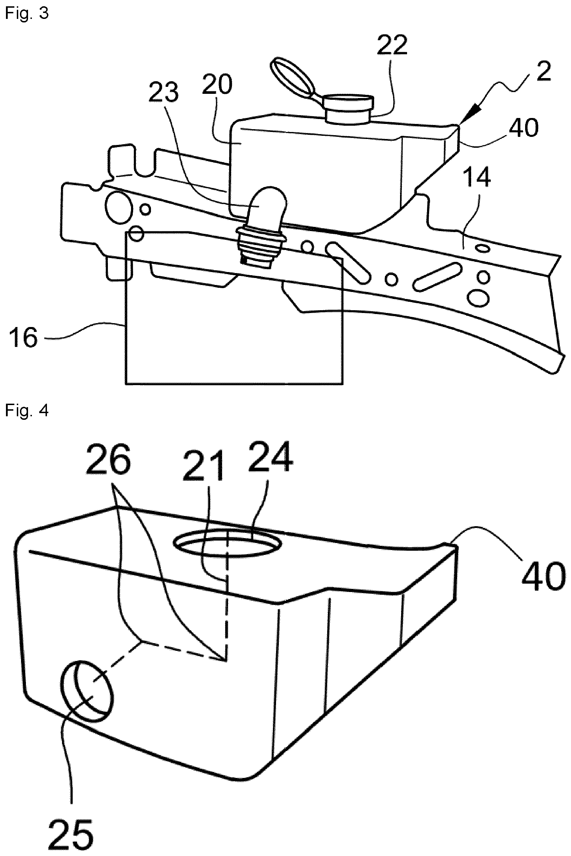

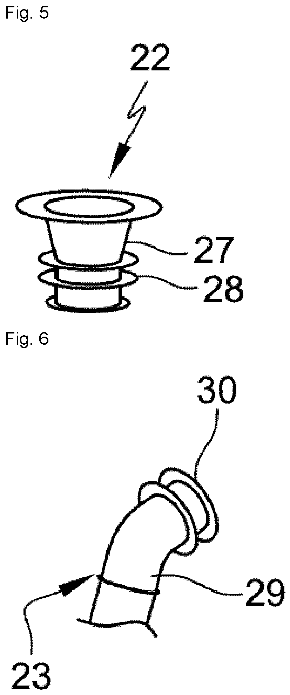

La figure 3 illustre plus précisément l'élément de filtration acoustique 2 en appui sur l'élément de caisse 14. L'élément de filtration acoustique 2 peut être fixé à l'élément de caisse 14 par exemple par encastrement ou avec des moyens de fixation tels que des pions sapin ou des harpons. L'élément de filtration acoustique 2 comprend un corps 20 en mousse dans lequel est formé un canal 21 de circulation pour un liquide, un insert d'entrée 22 et un insert de sortie 23. Ces trois éléments 20, 22, 23 sont représentés respectivement sur les figures 4, 5 et 6. L'insert d'entrée 22 débouche dans le canal 21 et l'insert de sortie 23 débouche dudit canal 21 vers le réservoir 16. Le réservoir 16 est donc relié en aval du canal 21. Le réservoir 16 est positionné en contrebas de l'insert de sortie 23. Notamment, une extrémité aval de l'insert de sortie 16 peut être plongée dans le réservoir 16. Le remplissage du réservoir 16 par un liquide est obtenu en faisant passer ce liquide par le canal 21.

Le corps 20 est un bloc constitué de mousse, c'est-à-dire d'une matière plastique ou élastomère sous forme cellulaire. En particulier, le corps 20 peut être constitué de polyuréthane de type POM. Il peut avoir une densité comprise entre 220 et 400 kg/m3 Il peut avoir une couleur noire ou sombre. Le corps 20 peut notamment être obtenu par moulage. Il peut comprendre une forme au moins grossièrement parallélépipédique. Avantageusement, le corps 20 comprend une certaine rigidité : notamment il est capable de supporter sans s'affaisser le poids des éléments qui sont fixés dessus ainsi que le poids d'un liquide circulant dans le canal 21.

Le canal 21, ou conduit 21, est délimité par un orifice d'entrée 24 et un orifice de sortie 25. Autrement dit, l'orifice d'entrée 24 et l'orifice de sortie 25 sont agencés à deux extrémités opposées du canal 21. Le canal 21 peut comprendre une section globalement constante, de forme circulaire. L'orifice d'entrée 24 est positionné sur une face supérieure du corps 20, sensiblement horizontale. L'orifice de sortie 25 est positionné sur une face latérale du corps 20, sensiblement verticale. Le canal 21 comprend donc au moins un coude 26, c'est-à-dire un changement de direction. Ce coude peut notamment être un coude à 90°, ou tout au moins présenter un angle supérieur ou égal à 30° ou 45°. Selon le mode de réalisation présenté le canal comprend deux coudes 26 formant un angle d'environ 90°. Le canal 21 comprend un parcours globalement descendant depuis l'orifice d'entrée 24 jusqu'à l'orifice de sortie 25, c'est-à-dire que le parcours du canal est agencé de sorte qu'un liquide présent au niveau de l'ouverture d'entrée 24 s'écoule naturellement sous l'effet de la gravité jusqu'à l'orifice de sortie 25, puis jusqu'au réservoir 16. En outre, le canal 21 ne comprend aucune zone de rétention de liquide, c'est-à-dire aucun volume mort où du liquide pourrait stagner. Selon une variante de réalisation, l'orifice de sortie 25 peut être positionné sur une face inférieure du corps 20, sensiblement horizontale.

Avantageusement, le corps en mousse est prévu pour supporter le contact direct avec le liquide destiné à être stocker dans le réservoir. En particulier, le corps en mousse est prévu pour supporter le contact direct avec du liquide lave-glace. La mousse constituant le corps 20 est donc de préférence une mousse à cellules fermées. Ainsi, le liquide n'est pas absorbé par le corps 20. En variante, le corps 20 pourrait être constitué d'une mousse à cellules ouvertes mais dans ce cas, un revêtement du canal 21 devrait être prévu afin que le corps 20 n'absorbe pas le liquide. L'utilisation de cellules fermées permet donc de s'affranchir d'un revêtement du canal 21.

L'insert d'entrée 22 et l'insert de sortie 23 sont tous les deux ancrés dans le corps en mousse. En particulier, l'insert d'entrée 22 comprend une portion tubulaire 27 débouchant dans le canal 21 et un moyen d'ancrage 28. Le moyen d'ancrage 28 comprend au moins un disque s'étendant à la périphérie de la portion tubulaire 27. En l'espèce l'insert d'entrée 22 comprend quatre disques parallèles les uns aux autres et agencés sur toute la hauteur de la portion tubulaire 27. Un disque supérieur s'étend à la surface de la face supérieure du corps 20. De même, l'insert de sortie 23 comprend une portion tubulaire 29 débouchant du canal 21 et un moyen d'ancrage 30. Le moyen d'ancrage comprend 30 deux disques parallèles noyés dans le corps 20.

Les disques autour des portions tubulaires 27, 29 peuvent être en nombre quelconque et de dimensions variables selon la taille des inserts et selon la qualité de la mousse formant le corps 20. Les disques sont destinés à stabiliser les inserts 22 et 23 dans la mousse. Ils peuvent être perforés pour mieux les ancrer dans la mousse. Les inserts 22 et 23 peuvent être par exemple réalisés en plastique injecté, puis positionnés dans un moule dans lequel une mousse est injectée pour former le corps 20.

La portion tubulaire 27 de l'insert d'entrée est droite et s'étend parallèlement à l'axe Z. Elle comprend une forme évasée vers le haut de manière à faciliter le versement d'un liquide. L'ensemble de la portion tubulaire 27 est positionnée à l'intérieur du corps 20.

La portion tubulaire 29 comprend une première extrémité à l'intérieur du corps 20, une deuxième extrémité à l'intérieur du réservoir 16 et une partie médiane, entre les deux extrémités qui s'étend du corps 20 jusqu'au réservoir 16. La portion tubulaire 29 comprend aussi un coude : la partie de la portion tubulaire 29 positionnée à l'intérieur du corps 20 est sensiblement horizontale et la partie de la portion tubulaire 29 positionnée à l'extérieur du corps 20 est sensiblement verticale. Selon une variante de réalisation, la portion tubulaire 29 positionnée à l'intérieur du corps 20 est sensiblement verticale et la partie de la portion tubulaire 29 positionnée à l'extérieur du corps 20 est sensiblement horizontale.

L'élément de filtration acoustique 2 est donc également un élément d'un dispositif de stockage d'un liquide, notamment un élément d'une goulotte de remplissage du réservoir 16. Il cumule donc deux fonctions bien différentes l'une de l'autre : d'une part il bloque le passage des ondes sonores vers l'habitacle, d'autre part il guide un liquide vers un réservoir depuis lequel le liquide pourra être utilisé pour différents usages, notamment pour le lavage du parebrise.

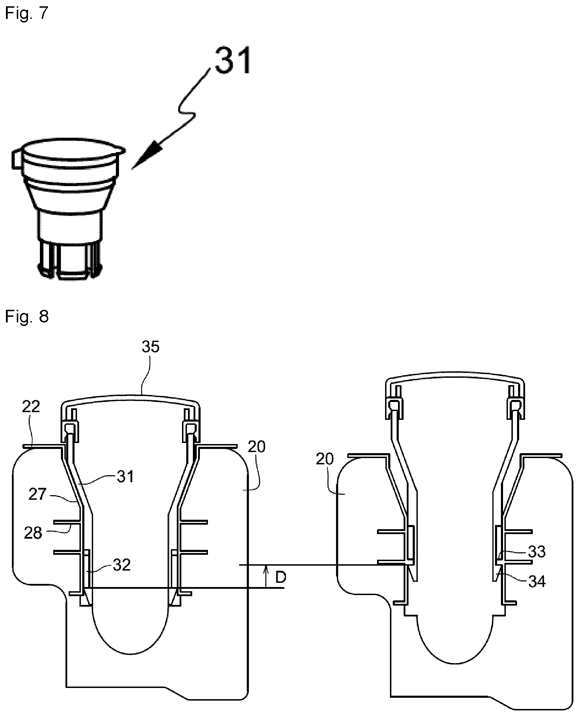

L'élément de filtration acoustique 2 comprend par ailleurs un entonnoir 31 coulissant entre une position rétractée à l'intérieur de l'insert d'entrée 22 et une position déployée au moins partiellement à l'extérieur de l'insert d'entrée. L'entonnoir 31 est notamment illustré sur les figures 7 et 8.

L'entonnoir peut comprendre une forme épousant sensiblement la forme de la portion tubulaire 27, soit une forme évasée vers le haut. La position rétractée de l'entonnoir est illustrée en partie gauche de la figure 8 et la position déployée de l'entonnoir est illustrée en partie droite de la figure 8. Entre ces deux positions l'entonnoir 31 peut être déplacé verticalement d'une distance D comprise par exemple entre 10mm et 50mm. En position déployée, l'entonnoir 31 facilite le remplissage du réservoir 16 puisqu'il permet de former une colonne de liquide suffisamment haute pour éviter un phénomène de reflux du liquide versé. L'intégration d'un entonnoir 31 permet d'éviter de prévoir un canal 21 dont la section verticale serait particulièrement longue. On peut ainsi conserver un élément de filtration acoustique 2 relativement compact suivant l'axe vertical Z tout en évitant les phénomènes de reflux lors du remplissage du réservoir. De plus, on peut ainsi conserver un espace libre entre l'insert d'entrée 22 et le capot 9. Ceci permet au capot 9 de pouvoir s'enfoncer en cas de choc avec un piéton. Ainsi, l'élément de filtration acoustique 2 satisfait aux exigences de sécurité du véhicule 1.

L'entonnoir 31 comprend par ailleurs des moyens de retenue 32 configurés pour maintenir l'entonnoir 31 en position déployée. Ces moyens de retenue peuvent comprendre par exemple un mécanisme à quart de tour coopérant avec la portion tubulaire 27 de l'insert d'entrée 22, notamment avec un rebord 33 circulaire formé sur une partie d'une paroi intérieure de la portion tubulaire 27. Ceci aide l'opération de remplissage du réservoir puisqu'il n'est pas nécessaire de maintenir manuellement l'entonnoir 31 en position déployée. En outre, l'entonnoir 31 peut comprendre une butée 34 coopérant avec le rebord 33 pour éviter de dissocier complètement l'entonnoir 31 de l'insert d'entrée 22. Ainsi, l'entonnoir ne peut pas être perdu. Avantageusement, l'extrémité inférieure la butée 34 est chanfreinée de manière à faciliter la déformation de l'entonnoir 31 lors de son assemblage initial avec l'insert d'entrée.

L'élément de filtration acoustique 2 comprend en outre un bouchon 35 obturant l'orifice d'entrée 24. Le bouchon peut être relié à une partie supérieure de l'entonnoir 31. En variante, le bouchon pourrait aussi être relié directement à l'insert d'entrée 22, voir même être relié directement au corps 20. Le bouchon est articulé entre une position ouverte (illustrée sur la figure 3) qui permet le remplissage du réservoir 16, et une position fermée (illustrée sur la figure 7) protégeant le réservoir 16 de l'entrée de particules indésirables. De manière à indiquer le type de réservoir auquel il donne accès, le bouchon 35 a de préférence une couleur déterminée, par exemple une couleur vive telle qu'une couleur jaune ou bleue.

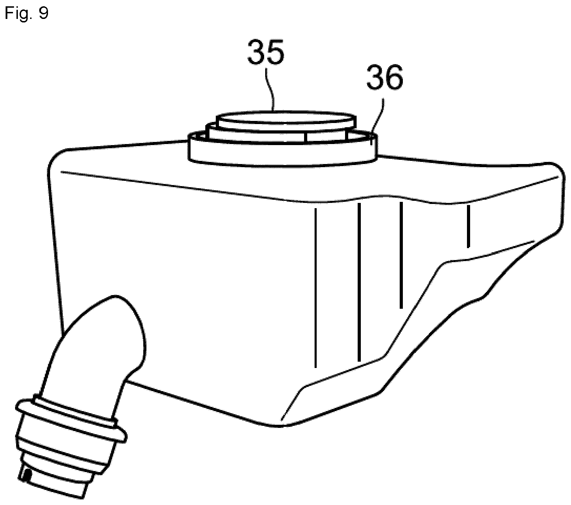

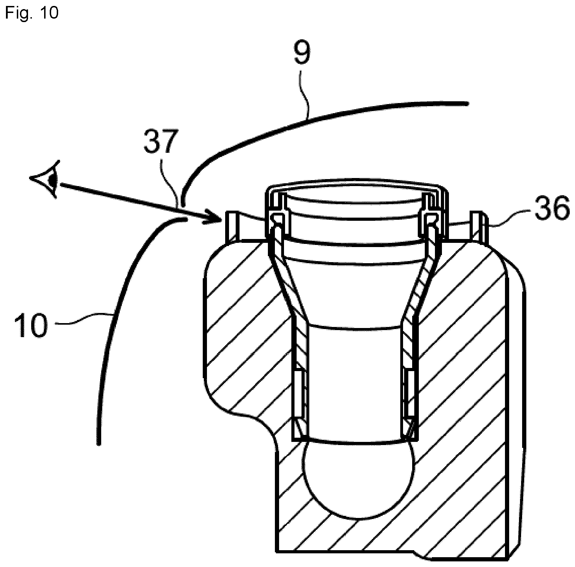

Les figures 9 à 11 illustrent certains perfectionnements envisageables de l'invention. Ces différents perfectionnements peuvent être intégrés à un élément de filtration acoustique selon l'invention indépendamment les uns des autres.

Tout d'abord, le corps 20 peut comprendre une collerette 36 s'étendant autour de l'orifice d'entrée 24 et/ou autour de l'orifice de sortie 25. En particulier lorsque cette collerette 36 est agencée autour de l'orifice d'entrée 24, elle permet de cacher le bouchon 35 du regard orienté vers un interstice 37 formé entre le capot 9 et l'élément d'habillage 10 de l'aile 7. En effet, cet interstice 37 peut laisser apparaitre des composants logés dans l'aile 7. Si la couleur vive du bouchon devait être visible depuis l'extérieur du véhicule, cela pourrait nuire à l'esthétique globale du véhicule. Le même artifice est applicable à l'orifice de sortie 25 : quand bien même celui-ci ne comprend pas de bouchon, il peut être utile de cacher du regard tout ou partie de l'insert de sortie 23. La collerette peut avoir par exemple une hauteur comprise entre 5mm et 10mm.

Par ailleurs, l'élément de filtration acoustique 2 peut comprendre un joint d'étanchéité 38 agencé autour de la portion tubulaire 29 de l'insert de sortie 23. Ce joint d'étanchéité 38 est partiellement engagé dans une ouverture de forme correspondante dans une paroi du réservoir 16. Ainsi, le réservoir 16 demeure étanche.

Lors du remplissage du réservoir 16, l'air présent dans le réservoir ressort naturellement vers l'extérieur en passant successivement par l'insert de sortie 23, le canal 21, puis l'insert d'entrée 22. Toutefois, lorsque le niveau de liquide atteint le niveau N1 de l'ouverture inférieure de l'insert de sortie 23, l'air ne peut plus s'échapper. De l'air se retrouve alors piégé à l'intérieur du réservoir 16 et empêche un remplissage plus complet de celui-ci.

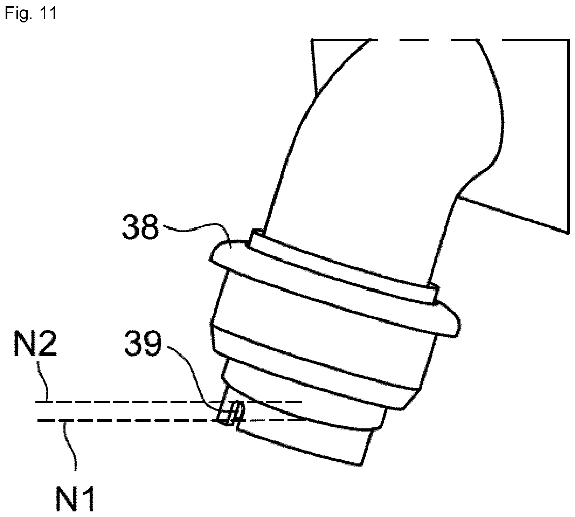

Avantageusement un trou d'évacuation d'air 39 est prévu dans l'insert de sortie 23. Plus particulièrement ce trou d'évacuation d'air est prévu dans la portion tubulaire 29 de l'insert de sortie qui est à l'intérieur du réservoir 16. L'air présent dans le réservoir 16 peut ressortir via le trou d'évacuation d'air 39 jusqu'à ce que le niveau de liquide atteigne le niveau N2 de ce trou d'évacuation d'air 39. Comme cela est bien illustré sur la figure 11, le niveau N2 se situe au-dessus du niveau N1, ce qui permet un meilleur remplissage du réservoir. Grace à l'intégration de ce trou d'évacuation d'air 39, on augmente la quantité de liquide stocké dans le réservoir 16. On rend aussi possible une implantation du réservoir 16 relativement haute, notamment au-dessus du niveau des roues avant du véhicule. On pourra toutefois veiller à conserver un certain volume d'air prisonnier dans le réservoir 16 même lorsque celui-ci est rempli, de manière à permettre une aspiration aisée du liquide qu'il contient.

Avantageusement, le trou d'évacuation d'air 39 communique avec l'ouverture inférieure de l'insert de sortie 23. Il se présente sous la forme d'une encoche formée à l'extrémité de la portion tubulaire 29. Ainsi le procédé de fabrication de l'insert de sortie 23 demeure aisé, notamment le moule permettant de fabriquer l'insert de sortie 23 par injection plastique demeure simple. En variante, le trou d'évacuation d'air 39 pourrait ne pas communiquer avec l'ouverture inférieure de l'insert de sortie 23.

Du liquide peut être rempli dans le réservoir 16 au travers de l'élément de filtration acoustique 2 jusqu'à atteindre le bord supérieur de l'insert d'entrée. Ainsi, le diamètre de section et/ou la longueur du canal 21 peuvent être adaptés pour augmenter la quantité totale de liquide stockée. Le canal 21 peut ainsi servir non seulement de goulotte de remplissage mais également de volume supplémentaire pour augmenter la quantité de liquide embarqué dans le véhicule.

Grâce à l'invention, on dispose d'un élément de filtration acoustique faisant office de goulotte de remplissage pour un réservoir. Un gain d'espace est ainsi envisageable. De plus, l'invention permet de positionner le réservoir dans l'aile du véhicule sans que la goulotte de remplissage n'altère l'isolation acoustique de l'habitacle. Enfin, l'élément de filtration acoustique améliore la sécurité car il peut se déformer plus facilement qu'une goulotte de remplissage en plastique rigide telle que les goulottes connues de l'état de la technique. Par conséquent le capot 9 peut plus facilement s'enfoncer en cas de choc avec un piéton.

## Revendications

1. Dispositif de stockage de liquide lave-glace pour un véhicule (1) automobile, **caractérisé en ce qu'**il comprend un élément de filtration acoustique (2) comprenant un corps (20) en mousse dans lequel est formé un canal (21) de circulation pour un liquide, et un réservoir (16) pour stocker du liquide lave-glace, le réservoir étant relié en aval dudit canal (21).

2. Dispositif de stockage selon la revendication précédente, **caractérisé en ce que** ladite mousse est une mousse à cellules fermées.

3. Dispositif de stockage selon l'une des revendications précédentes, **caractérisé en ce que** le canal (21) comprend au moins un coude (26), et/ou **en ce qu'**il est agencé de manière à permettre un écoulement d'un liquide par gravité, et/ou **en ce qu'**il ne comprend aucune zone de rétention de liquide.

4. Dispositif de stockage selon l'une des revendications précédentes, **caractérisé en ce qu'**il comprend un insert d'entrée (22) débouchant dans ledit canal (21), l'insert d'entrée étant ancré dans le corps en mousse, et/ou **en ce qu'**il comprend un insert de sortie (23) débouchant dudit canal, l'insert de sortie étant ancré dans le corps en mousse.

5. Dispositif de stockage selon la revendication précédente, **caractérisé en ce que** l'insert d'entrée (22) et/ou l'insert de sortie (23) comprend une portion tubulaire (27, 29) débouchant dans ledit canal et un moyen d'ancrage (28, 30) dans le corps en mousse, le moyen d'ancrage comprenant au moins un disque s'étendant à la périphérie de la portion tubulaire.

6. Dispositif de stockage selon l'une des revendications précédentes, **caractérisé en ce qu'**il comprend un insert d'entrée (23) et un entonnoir (31) coulissant entre une position rétractée à l'intérieur de l'insert d'entrée et une position déployée au moins partiellement à l'extérieur de l'insert d'entrée.

7. Dispositif de stockage selon l'une des revendications précédentes, **caractérisé en ce qu'**il comprend un insert de sortie (23), l'insert de sortie comprenant une portion tubulaire (29) destinée à déboucher dans un réservoir (16), la portion tubulaire comprenant un trou d'évacuation d'air (39).

8. Dispositif de stockage selon l'une des revendications précédentes, **caractérisé en ce que** le corps (20) en mousse comprend un orifice d'entrée (24) et un orifice de sortie (25), l'orifice d'entrée et l'orifice de sortie étant agencés à deux extrémités opposées dudit canal (21), le corps en mousse comprenant une collerette (36) s'étendant autour de l'orifice d'entrée et/ou une collerette s'étendant autour de l'orifice de sortie.

9. Véhicule (1) automobile, **caractérisé en ce qu'**il comprend un Dispositif de stockage selon l'une des revendications précédentes, l'élément de filtration acoustique (2) formant une barrière acoustique entre un compartiment moteur (3) du véhicule et un habitacle (4) du véhicule.

10. Véhicule automobile, **caractérisé en ce qu'**il comprend un dispositif de stockage selon l'une des revendications 1 à 8, l'élément de filtration acoustique (2) et le réservoir (16) étant positionnés dans une aile (7) avant du véhicule.

## Patentansprüche

1. Vorrichtung zur Speicherung von Scheibenwaschflüssigkeit für ein Kraftfahrzeug (1), **dadurch gekennzeichnet, dass** sie ein Schallfilterelement (2) umfasst, das einen Körper (20) aus Schaum umfasst, in dem ein Zirkulationskanal (21) für eine Flüssigkeit gebildet ist, und einen Behälter (16) zum Speichern von Scheibenwaschflüssigkeit, wobei der Behälter, stromab des Kanals (21) angeschlossen ist.

2. Vorrichtung zur Speicherung nach dem vorhergehenden Anspruch, **dadurch gekennzeichnet, dass** der Schaum ein geschlossenzelliger Schaum ist.

3. Vorrichtung zur Speicherung nach einem der vorhergehenden Ansprüche, **dadurch gekennzeichnet, dass** der Kanal (21) mindestens eine Krümmung (26) aufweist, und/oder dadurch, dass er so angeordnet ist, dass er ein Fließen einer Flüssigkeit per Schwerkraft ermöglicht, und/oder dadurch, dass er keine Flüssigkeitsrückhaltezone aufweist.

4. Vorrichtung zur Speicherung nach einem der vorhergehenden Ansprüche, **dadurch gekennzeichnet, dass** sie einen Einlasseinsatz (22) umfasst, der in den Kanal (21) einmündet, wobei der Einlasseinsatz in dem Körper aus Schaum verankert ist, und/oder dadurch, dass sie einen Auslasseinsatz (23) umfasst, der aus dem Kanal ausmündet, wobei der Auslasseinsatz in dem Körper aus Schaum verankert ist.

5. Vorrichtung zur Speicherung nach dem vorhergehenden Anspruch, **dadurch gekennzeichnet, dass** der Einlasseinsatz (22) und/oder der Auslasseinsatz (23) einen rohrförmigen Abschnitt (27, 29), der in den Kanal einmündet, und ein Mittel (28, 30) zur Verankerung in dem Körper aus Schaum umfasst, wobei das Mittel zur Verankerung mindestens eine Scheibe umfasst, die sich am Umfang des rohrförmigen Abschnitts erstreckt.

6. Vorrichtung zur Speicherung nach einem der vorhergehenden Ansprüche, **dadurch gekennzeichnet, dass** sie einen Einlasseinsatz (23) umfasst und einen Trichter (31), der zwischen einer nach innerhalb des Einlasseinsatzes eingezogenen Position und einer mindestens teilweise nach außerhalb des Einlasseinsatzes ausgezogenen Position verschiebbar ist.

7. Vorrichtung zur Speicherung nach einem der vorhergehenden Ansprüche, **dadurch gekennzeichnet, dass** sie einen Auslasseinsatz (23) umfasst, wobei der Auslasseinsatz einen rohrförmigen Abschnitt (29) umfasst, der dazu bestimmt ist, in einen Behälter (16) einzumünden, wobei der rohrförmige Abschnitt ein Entlüftungsloch (39) umfasst.

8. Vorrichtung zur Speicherung nach einem der vorhergehenden Ansprüche, **dadurch gekennzeichnet, dass** der Körper (20) aus Schaum eine Einlassöffnung (24) und eine Auslassöffnung (25) umfasst, wobei die Einlassöffnung und die Auslassöffnung an zwei entgegengesetzten Enden des Kanals (21) angeordnet sind, wobei der Körper aus Schaum einen sich um die Einlassöffnung erstreckenden Kragen (36) und/oder einen sich um die Auslassöffnung erstreckenden Kragen umfasst.

9. Kraftfahrzeug (1), **dadurch gekennzeichnet, dass** es eine Vorrichtung zur Speicherung nach einem der vorhergehenden Ansprüche umfasst, wobei das Schallfilterelement (2) eine Schallbarriere zwischen einem Motorraum (3) des Fahrzeugs und einem Fahrgastraum (4) des Fahrzeugs bildet.

10. Kraftfahrzeug, **dadurch gekennzeichnet, dass** es eine Vorrichtung zur Speicherung nach einem der Ansprüche 1 bis 8 umfasst, wobei das Schallfilterelement (2) und der Behälter (16) in einem vorderen Kotflügel (7) des Fahrzeugs positioniert sind.

## Claims

1. Windscreen washer liquid storage device for a motor vehicle (1), **characterized in that** it comprises an acoustic filtration element (2) comprising a foam body (20) in which a circulation channel (21) for a liquid is formed, and a reservoir (16) for storing windscreen washer liquid, the reservoir being connected downstream of said channel (21).

2. Storage device according to the preceding claim, **characterized in that** said foam is a foam with closed cells.

3. Storage device according to either of the preceding claims, **characterized in that** the channel (21) comprises at least one bend (26), and/or **in that** it is arranged so as to allow a flow of a liquid by gravity, and/or **in that** it does not comprise any liquid retention zone.

4. Storage device according to one of the preceding claims, **characterized in that** it comprises an inlet insert (22) leading into said channel (21), the inlet insert being anchored in the foam body, and/or **in that** it comprises an outlet insert (23) leading out of said channel, the outlet insert being anchored in the foam body.

5. Storage device according to the preceding claim, **characterized in that** the inlet insert (22) and/or the outlet insert (23) comprises a tubular portion (27, 29) leading into said channel and a means (28, 30) for anchoring in the foam body, the anchoring means comprising at least one disc extending at the periphery of the tubular portion.

6. Storage device according to one of the preceding claims, **characterized in that** it comprises an inlet insert (23) and a funnel (31) sliding between a position retracted inside the inlet insert and a position deployed at least partially outside the inlet insert.

7. Storage device according to one of the preceding claims, **characterized in that** it comprises an outlet insert (23), the outlet insert comprising a tubular portion (29) intended to lead into a reservoir (16), the tubular portion comprising an air evacuation hole (39).

8. Storage device according to one of the preceding claims, **characterized in that** the foam body (20) comprises an inlet orifice (24) and an outlet orifice (25), the inlet orifice and the outlet orifice being arranged at two opposite ends of said channel (21), the foam body comprising a collar (36) extending around the inlet orifice and/or a collar extending around the outlet orifice.

9. Motor vehicle (1), **characterized in that** it comprises a storage device according to one of the preceding claims, the acoustic filtration element (2) forming an acoustic barrier between an engine compartment (3) of the vehicle and a passenger compartment (4) of the vehicle.

10. Motor vehicle, **characterized in that** it comprises a storage device according to one of Claims 1 to 8, the acoustic filtration element (2) and the reservoir (16) being positioned in a front wing (7) of the vehicle.
